(19) Europäisches Patentamt
European Patent Office
Office européen des brevets

(11) **EP 3 446 809 B1**

(12) **EUROPEAN PATENT SPECIFICATION**

(45) Date of publication and mention of the grant of the patent:
**10.06.2020 Bulletin 2020/24**

(21) Application number: **16899333.5**

(22) Date of filing: **19.04.2016**

(51) Int Cl.:
*B22D 11/12* (2006.01)   *C21D 8/02* (2006.01)
*C22C 38/00* (2006.01)   *C22C 38/02* (2006.01)
*C22C 38/04* (2006.01)   *C22C 38/06* (2006.01)
*C22C 38/18* (2006.01)   *C22C 38/20* (2006.01)
*C22C 38/22* (2006.01)   *C22C 38/24* (2006.01)
*C22C 38/26* (2006.01)   *C22C 38/28* (2006.01)
*C22C 38/32* (2006.01)   *C22C 38/38* (2006.01)
*C22C 38/40* (2006.01)   *C22C 38/58* (2006.01)
*B22D 11/00* (2006.01)

(86) International application number:
**PCT/JP2016/002100**

(87) International publication number:
**WO 2017/183058 (26.10.2017 Gazette 2017/43)**

(54) **ABRASION-RESISTANT STEEL PLATE AND METHOD FOR PRODUCING ABRASION-RESISTANT STEEL PLATE**

ABRIEBFESTES STAHLBLECH UND VERFAHREN ZUR HERSTELLUNG EINES ABRIEBFESTEN STAHLBLECHS

TÔLE D'ACIER RÉSISTANTE À L'ABRASION ET PROCÉDÉ DE PRODUCTION DE TÔLE D'ACIER RÉSISTANTE À L'ABRASION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.02.2019 Bulletin 2019/09**

(73) Proprietor: **JFE Steel Corporation**
**Tokyo 100-0011 (JP)**

(72) Inventors:
• **TERAZAWA, Yusuke**
  **Tokyo 100-0011 (JP)**
• **TAKAYAMA, Naoki**
  **Tokyo 100-0011 (JP)**
• **HAYASHI, Kenji**
  **Tokyo 100-0011 (JP)**
• **HASE, Kazukuni**
  **Tokyo 100-0011 (JP)**

(74) Representative: **Haseltine Lake Kempner LLP**
**Bürkleinstrasse 10**
**80538 München (DE)**

(56) References cited:
EP-A1- 2 873 747    WO-A1-2014/045553
WO-A1-2015/115086    WO-A1-2015/147216
JP-A- H0 551 691    JP-A- H01 255 622
JP-A- 2006 506 526    JP-A- 2007 092 155
JP-A- 2008 018 439    JP-A- 2008 018 439
JP-A- 2009 030 094    US-A1- 2014 124 102

**Description**

TECHNICAL FIELD

The present disclosure relates to an abrasion-resistant steel plate, and particularly to an abrasion-resistant steel plate that can achieve both delayed fracture resistance and abrasion resistance at high level and low cost. The present disclosure also relates to a method of producing the abrasion-resistant steel plate.

BACKGROUND

Industrial machines, parts, conveying devices (e.g. power shovels, bulldozers, hoppers, bucket conveyors, rock crushers), and the like used in fields such as construction, civil engineering, and mining are exposed to abrasion such as abrasive abrasion, sliding abrasion, and impact abrasion by rocks, sand, ore, etc. Steel used in such industrial machines, parts, carriers, and the like is therefore required to have excellent abrasion resistance, in order to improve life.

It is known that the abrasion resistance of steel can be improved by increasing hardness. Hence, high-hardness steel yielded by performing heat treatment such as quenching on alloy steel containing a large amount of alloying elements such as Cr and Mo is widely used as abrasion-resistant steel.

For example, JP 4645306 B2 (PTL 1) and JP 4735191 B2 (PTL 2) each propose an abrasion-resistant steel plate whose surface layer part has a hardness of 360 to 490 in Brinell hardness (HB). High surface hardness of this abrasion-resistant steel plate is realized by adding a predetermined amount of alloying elements and performing quenching to form a microstructure mainly composed of martensite.

In the field of abrasion-resistant steel plates, not only the improvement of abrasion resistance but also the prevention of delayed fractures is required. A delayed fracture is a phenomenon that a steel plate fractures suddenly despite the stress applied to the steel plate being not greater than its yield strength. The delayed fracture phenomenon is more likely to occur when the steel plate strength is higher, and is promoted by hydrogen entry into the steel plate. An example of the delayed fracture phenomenon of the abrasion-resistant steel plate is cracking after gas cutting. During gas cutting, the steel plate becomes brittle due to hydrogen entry from combustion gas. Further, because of residual stress after the gas cutting, cracking occurs a few hours to a few days after the cutting. Since the abrasion-resistant steel plate has high hardness, gas cutting is frequently employed. Therefore, the abrasion-resistant steel plate often encounters the problem of delayed fractures after gas cutting (hereafter also referred to as "gas cutting cracking").

JP 5145804 B2 (PTL 3) and JP 5145805 B2 (PTL 4) each propose an abrasion-resistant steel plate whose chemical composition and microstructure are controlled to suppress delayed fractures caused by gas cutting and the like.

WO 2015/115086 A1 and EP 2 873 747 A1 disclose abrasion-resistant steel plates and methods of manufacturing thereof.

CITATION LIST

Patent Literatures

    PTL 1: JP 4645306 B2
    PTL 2: JP 4735191 B2
    PTL 3: JP 5145804 B2
    PTL 4: JP 5145805 B2

SUMMARY

(Technical Problem)

However, with the abrasion-resistant steel plate described in each of PTL 1 and PTL 2, a large amount of expensive alloying elements needs to be added in order to ensure hardness. Typically, an effective way of reducing alloying costs is to decrease the usage of expensive alloying elements such as Mo and Cr and increase the usage of inexpensive alloying elements such as Mn. Increasing the usage of Mn in the abrasion-resistant steel plate described in PTL 1 or PTL 2, however, causes a decrease in gas cutting cracking resistance.

With the abrasion-resistant steel plate described in each of PTL 3 and PTL 4, gas cutting cracking is suppressed to a certain extent, but still the Mn content needs to be reduced in order to prevent delayed fractures.

There is thus difficulty in achieving both gas cutting cracking resistance and abrasion resistance at high level and low cost in the above-mentioned abrasion-resistant steel plates.

It could, therefore, be helpful to provide an abrasion-resistant steel plate that can achieve both delayed fracture resistance and abrasion resistance at high level and low cost. It could also be helpful to provide a method of producing the abrasion-resistant steel plate.

(Solution to Problem)

As a result of conducting keen examination, we discovered that a delayed fracture after gas cutting in an abrasion-resistant steel plate originates from an intergranular fracture that occurs in prior austenite grain boundaries of martensite microstructure or bainite microstructure, and that the intergranular fracture occurs when the influences of (a) residual stress generated by gas cutting, (b) hydrogen embrittlement caused by hydrogen entering the steel plate from cutting gas during gas cutting, and (c) temper embrittlement of the steel plate due to heating during gas cutting overlap.

We also discovered that a plate thickness central segregation area of the steel plate where Mn and P, which are intergranular embrittlement elements, concentrate is an origin of gas cutting cracking, and that the segregation of the intergranular embrittlement elements to the prior austenite grain boundaries in the plate thickness central segregation area is further facilitated by heating during gas cutting, as a result of which the strength of the prior austenite grain boundaries decreases significantly and gas cutting cracking occurs.

The segregation of Mn and P to the plate thickness center takes place during continuous casting. In the continuous casting, the solidification of molten steel progresses inwardly from the surface. Here, since the solid solubility limit of Mn or P is higher in liquid phase than in solid phase, alloying elements such as Mn and P concentrate into the molten steel from the solidified steel at the solid-liquid phase interface. At the plate thickness central position which is the final solidification part, the molten steel significantly concentrated with the alloying elements solidifies, thus forming the central segregation area.

Based on these discoveries, we further examined how to prevent cracking originated from the central segregation area. We consequently discovered that, by suppressing the central segregation of Mn and P in the continuous casting and also refining the prior austenite grain size in the microstructure of the final steel plate, excellent gas cutting cracking resistance is obtained even when the Mn content in the whole steel plate is high.

The present disclosure is based on these discoveries and the invention is defined in the appended claims.

(Advantageous Effect)

It is thus possible to obtain excellent delayed fracture resistance without excessively reducing the Mn content in the whole steel plate, and so achieve both delayed fracture resistance and abrasion resistance in the abrasion-resistant steel plate at low cost. The presently disclosed technique is effective not only for delayed fracture resistance after gas cutting but also for delayed fractures caused by other factors.

BRIEF DESCRIPTION OF THE DRAWINGS

In the accompanying drawings:

FIG. 1 is a schematic diagram illustrating a final solidification position in continuous casting; and
FIG. 2 is a schematic diagram illustrating a continuous casting method according to one of the disclosed embodiments.

DETAILED DESCRIPTION

[Chemical composition]

A method of implementing the present disclosure is described in detail below. In the present disclosure, it is important that a billet used in an abrasion-resistant steel plate and its production has the chemical composition described above. The reasons for limiting the chemical composition of steel in this way in the present disclosure are described first. In the description, "%" regarding the chemical composition denotes "mass%" unless otherwise noted.

C: 0.10 % to 0.23 %

C is an essential element for enhancing the hardness of martensite matrix. If the C content is less than 0.10 %, the solute C content in martensite microstructure is low, which causes a decrease in abrasion resistance. If the C content is more than 0.23 %, weldability and workability decrease. The C content is therefore 0.10 % to 0.23 % in the present disclosure. The C content is preferably 0.12 % to 0.22 %.

Si: 0.01 % to 1.0 %

Si is an element effective in deoxidation. If the Si content is less than 0.01 %, the effect is insufficient. Si is also an element that contributes to higher hardness of the steel by solid solution strengthening. However, if the Si content is more than 1.0 %, not only ductility and toughness decrease, but also problems such as an increase in the number of inclusions arise. The Si content is therefore 0.01 % to 1.0 %. The Si content is preferably 0.01 % to 0.8 %.

Mn: 0.30 % to 3.00 %

Mn is an element having a function of improving the quench hardenability of the steel. Adding Mn increases the hardness of the steel after quenching, as a result of which abrasion resistance can be improved. If the Mn content is less than 0.30 %, the effect is insufficient. The Mn content is therefore 0.30 % or more. If the Mn content is more than 3.00 %, not only weldability and toughness decrease, but also delayed fracture resistance decreases. The Mn content is therefore 3.00 % or less. The Mn content is preferably 0.50 % to 2.70 %.

P: 0.025 % or less

P is an intergranular embrittlement element. The segregation of P to crystal grain boundaries causes a decrease in the toughness of the steel and also causes a decrease in delayed fracture resistance. The P content is therefore 0.025 % or less. The P content is preferably 0.015 % or less. The P content is preferably as low as possible. Accordingly, no lower limit is placed on the P content, and the lower limit may be 0 %. Typically, however, P is an element inevitably contained in steel as an impurity, so that in industrial terms the lower limit may be more than 0 %. Excessively low P content leads to longer refining time and higher cost, and so the P content is preferably 0.001 % or more.

S: 0.02 % or less

S decreases the toughness of the steel, and therefore the S content is 0.02 % or less. The S content is preferably 0.015 % or less. The S content is preferably as low as possible. Accordingly, no lower limit is placed on the S content, and the lower limit may be 0 %. In industrial terms, the lower limit may be more than 0 %. Excessively low S content leads to longer refining time and higher cost, and so the S content is preferably 0.0001 % or more.

Cr: 0.01 % to 2.00 %

Cr is an element having a function of improving the quench hardenability of the steel. Adding Cr increases the hardness of the steel after quenching, as a result of which abrasion resistance can be improved. To achieve the effect, the Cr content needs to be 0.01 % or more. If the Cr content is more than 2.00 %, weldability decreases. The Cr content is therefore 0.01 % to 2.00 %. The Cr content is preferably 0.05 % to 1.80 %.

Al: 0.001 % to 0.100 %

A1 is an element that is effective as a deoxidizer and also has an effect of reducing austenite grain size by forming nitride. To achieve the effect, the Al content needs to be 0.001 % or more. If the Al content is more than 0.100 %, the cleanliness of the steel decreases, and consequently ductility and toughness decrease. The Al content is therefore 0.001 % to 0.100 %.

N: 0.01 % or less

N is an element that decreases ductility and toughness, and so the N content is 0.01 % or less. The N content is preferably as low as possible. Accordingly, no lower limit is placed on the N content, and the lower limit may be 0 %. Typically, however, N is an element inevitably contained in steel as an impurity, so that in industrial terms the lower limit may be more than 0 %. Excessively low N content leads to longer refining time and higher cost, and so the N content is preferably 0.0005 % or more.

The steel plate used in the present disclosure contains the balance consisting of Fe and inevitable impurities in addition to the components described above.

The steel plate according to the present disclosure has the above-described components as basic components. For improvement in quench hardenability or weldability, the steel plate may optionally contain one or more selected from the group consisting of Cu: 0.01 % to 2.0 %, Ni: 0.01 % to 5.0 %, Mo: 0.01 % to 3.0 %, Nb: 0.001 % to 0.100 %, Ti: 0.001 % to 0.050 %, B: 0.0001 % to 0.0100 %, V: 0.001 % to 1.00 %, W: 0.01 % to 1.5 %, Ca: 0.0001 % to 0.0200 %, Mg: 0.0001 % to 0.0200 %, and REM: 0.0005 % to 0.0500 %.

Cu: 0.01 % to 2.0 %

Cu is an element capable of improving quench hardenability without greatly degrading toughness in base metal and weld joints. To achieve the effect, the Cu content needs to be 0.01 % or more. If the Cu content is more than 2.0 %, steel plate cracking is caused by a Cu-concentrated layer formed directly below scale. Accordingly, in the case of adding Cu, the Cu content is 0.01 % to 2.0 %. The Cu content is preferably 0.05 % to 1.5 %.

Ni: 0.01 % to 5.0 %

Ni is an element having an effect of enhancing quench hardenability and also improving toughness. To achieve the effect, the Ni content needs to be 0.01 % or more. If the Ni content is more than 5.0 %, the production cost increases. Accordingly, in the case of adding Ni, the Ni content is 0.01 % to 5.0 %. The Ni content is preferably 0.05 % to 4.5 %.

Mo: 0.01 % to 3.0 %

Mo is an element that improves the quench hardenability of the steel. To achieve the effect, the Mo content needs to be 0.01 % or more. If the Mo content is more than 3.0 %, weldability decreases. Accordingly, in the case of adding Mo, the Mo content is 0.01 % to 3.0 %. The Mo content is preferably 0.05 % to 2.0 %.

Nb: 0.001 % to 0.100 %

Nb is an element that has an effect of reducing prior austenite grain size by precipitating as carbonitride. To achieve the effect, the Nb content needs to be 0.001 % or more. If the Nb content is more than 0.100 %, weldability decreases. Accordingly, in the case of adding Nb, the Nb content is 0.001 % to 0.100 %.

Ti: 0.001 % to 0.050 %

Ti is an element that has an effect of reducing prior austenite grain size by forming nitride. To achieve the effect, the Ti content needs to be 0.001 % or more. If the Ti content is more than 0.050 %, the cleanliness of the steel decreases, and consequently ductility and toughness decrease. Accordingly, in the case of adding Ti, the Ti content is 0.001 % to 0.050 %.

B: 0.0001 % to 0.0100 %

B is an element that has an effect of improving quench hardenability and thus improving the strength of the steel plate when added in infinitesimal quantity. To achieve the effect, the B content needs to be 0.0001 % or more. If the B content is more than 0.0100 %, weldability decreases and also quench hardenability decreases. Accordingly, in the case of adding B, the B content is 0.0001 % to 0.0100 %. The B content is preferably 0.0001 % to 0.0050 %.

V: 0.001 % to 1.00 %

V is an element that has an effect of improving the quench hardenability of the steel. To achieve the effect, the V content needs to be 0.001 % or more. If the V content is more than 1.00 %, weldability decreases. Accordingly, in the case of adding V, the V content is 0.001 % to 1.00 %.

W: 0.01 % to 1.50 %

W is an element that has an effect of improving the quench hardenability of the steel. To achieve the effect, the W content needs to be 0.01 % or more. If the W content is more than 1.50 %, weldability decreases. Accordingly, in the case of adding W, the W content is 0.01 % to 1.50 %.

Ca: 0.0001 % to 0.0200 %

Ca is an element that improves weldability by forming oxysulfide having high stability at high temperature. To achieve the effect, the Ca content needs to be 0.0001 % or more. If the Ca content is more than 0.0200 %, cleanliness decreases and the toughness of the steel is impaired. Accordingly, in the case of adding Ca, the Ca content is 0.0001 % to 0.0200 %.

Mg: 0.0001 % to 0.0200 %

Mg is an element that improves weldability by forming oxysulfide having high stability at high temperature. To achieve the effect, the Mg content needs to be 0.0001 % or more. If the Mg content is more than 0.0200 %, the Mg addition effect is saturated, and the effect appropriate to the content cannot be expected, which is economically disadvantageous. Accordingly, in the case of adding Mg, the Mg content is 0.0001 % to 0.0200 %.

REM: 0.0005 % to 0.0500 %

REM (rare earth metal) is an element that improves weldability by forming oxysulfide having high stability at high temperature. To achieve the effect, the REM content needs to be 0.0005 % or more. If the REM content is more than 0.0500 %, the REM addition effect is saturated, and the effect appropriate to the content cannot be expected, which is economically disadvantageous. Accordingly, in the case of adding REM, the REM content is 0.0005 % to 0.0500 %.

[Microstructure]

In addition to having the chemical composition described above, the abrasion-resistant steel plate according to the present disclosure has a microstructure in which the volume fraction of martensite at a depth of 1 mm from the surface of the abrasion-resistant steel plate is 90 % or more, and the prior austenite grain size in the plate thickness central part of the abrasion-resistant steel plate is 80 $\mu$m or less. The reasons for limiting the microstructure of the steel in this way are described below.

Volume fraction of martensite: 90 % or more

If the volume fraction of martensite is less than 90 %, the hardness of the matrix of the steel plate decreases, so that abrasion resistance decreases. The volume fraction of martensite is therefore 90 % or more. Remaining microstructures other than martensite are not limited and may be ferrite, pearlite, austenite, and bainite microstructures. The volume fraction of martensite is preferably as high as possible. Accordingly, no upper limit is placed on the volume fraction, and the upper limit may be 100 %. The volume fraction of martensite is a value at a depth position of 1 mm from the surface of the abrasion-resistant steel plate. The volume fraction of martensite can be measured by the method described in the EXAMPLES section.

Prior austenite grain size: 80 $\mu$m or less

If the prior austenite grain size is more than 80 $\mu$m, the delayed fracture resistance of the abrasion-resistant steel plate decreases. This is because, as a result of the decrease of the area of the prior austenite grain boundaries, the contents of Mn and P per unit area of the prior austenite grain boundaries increase, and grain boundary embrittlement becomes prominent. The prior austenite grain size is therefore 80 $\mu$m or less. The prior austenite grain size is preferably as small as possible. Accordingly, no lower limit is placed on the prior austenite grain size, but the prior austenite grain size is typically 1 $\mu$m or more. The prior austenite grain size mentioned here is the equivalent circular diameter of prior austenite grains in the plate thickness central part of the abrasion-resistant steel plate. The prior austenite grain size can be measured by the method described in the EXAMPLES section.

[Central segregation]

In the present disclosure, it is important that the concentration [Mn] of Mn (mass%) and the concentration [P] of P (mass%) in the plate thickness central segregation area satisfy the following Expression (1):

$$0.04[\mathrm{Mn}] + [\mathrm{P}] < 0.55 \qquad \ldots (1).$$

A delayed fracture after gas cutting originates from a part where Mn and P which are intergranular embrittlement elements segregate significantly in the plate thickness central segregation area. Further examination revealed that the influence of P on grain boundary embrittlement is greater than that of Mn. Hence, gas cutting cracking resistance can be improved by controlling the concentrations of Mn and P in the plate thickness central segregation area so as to satisfy Expression (1). No lower limit is placed on the value of (0.04[Mn] + [P]). Typically, however, [Mn] is not less than the Mn content $[Mn]_0$ in the whole steel plate and [P] is not less than the P content $[P]_0$ in the whole steel plate, so that $0.04[Mn]_0 + [P]_0 \leq 0.04[Mn] + [P]$. The concentrations [Mn] and [P] of Mn and P in the plate thickness central segregation area can be measured by the method described in the EXAMPLES section.

[Brinell hardness]

Brinell hardness: 360 to 490 HBW 10/3000

The abrasion resistance of the steel plate can be improved by increasing the hardness in the steel plate surface layer part. If the hardness in the steel plate surface layer part is less than 360 HBW in Brinell hardness, sufficient abrasion resistance cannot be obtained. If the hardness in the steel plate surface layer part is more than 490 HBW in Brinell hardness, bending workability decreases. Accordingly, in the present disclosure, the hardness in the steel plate surface layer part is 360 HBW to 490 HBW in Brinell hardness. The hardness mentioned here is Brinell hardness at a depth position of 1 mm from the surface of the abrasion-resistant steel plate. The Brinell hardness is a value (HBW 10/3000) measured with a load of 3000 Kgf using tungsten hard balls of 10 mm in diameter. The Brinell hardness can be measured by the method described in the EXAMPLES section.

[Production method]

A method of producing the abrasion-resistant steel plate according to the present disclosure is described below. The abrasion-resistant steel plate according to the present disclosure can be produced by any of a method of performing reheating quenching (RQ) after hot rolling and a method of performing direct quenching (DQ) after hot rolling.

In a disclosed embodiment involving reheating quenching, the abrasion-resistant steel plate can be produced by sequentially performing the following:

(1) subjecting molten steel to continuous casting to form a slab;
(2) heating the slab to 1000 °C to 1300 °C;
(3) hot rolling the heated slab to obtain a hot-rolled steel plate;
(4-1) reheating the hot-rolled steel plate to a reheating quenching temperature; and
(4-2) quenching the reheated hot-rolled steel plate.

In another disclosed embodiment involving direct quenching, the abrasion-resistant steel plate can be produced by sequentially performing the following:

(1) subjecting molten steel to continuous casting to form a slab;
(2) heating the slab to 1000 °C to 1300 °C;
(3) hot rolling the heated slab to obtain a hot-rolled steel plate;
(4) direct quenching the hot-rolled steel plate.

In each of these embodiments, the chemical composition of the slab is as described above. In the continuous casting, light reduction rolling with a rolling reduction gradient of 0.4 mm/m or more is performed twice or more, upstream from the final solidification position of the slab. Moreover, the reheating quenching temperature in the case of performing the reheating quenching is $Ac_3$ to 1050 °C, and the direct quenching temperature in the case of performing the direct quenching is $Ac_3$ or more. Further, in each of the reheating quenching and the direct quenching, the average cooling rate from 650 °C to 300 °C is 1 °C/s or more. The reasons for limiting the conditions in this way are described below. The temperature mentioned in the following description is the temperature in the plate thickness central part unless otherwise noted. The temperature in the plate thickness central part can be calculated by thermal transfer calculation. The following description applies to both of the case of performing the reheating quenching and the case of performing the direct quenching, unless otherwise noted.

Light reduction rolling: perform light reduction rolling with rolling reduction gradient of 0.4 mm/m or more twice or more upstream from final solidification position of the slab

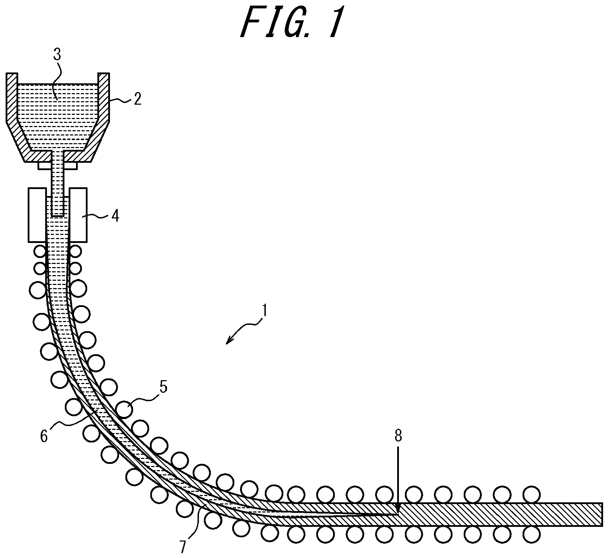

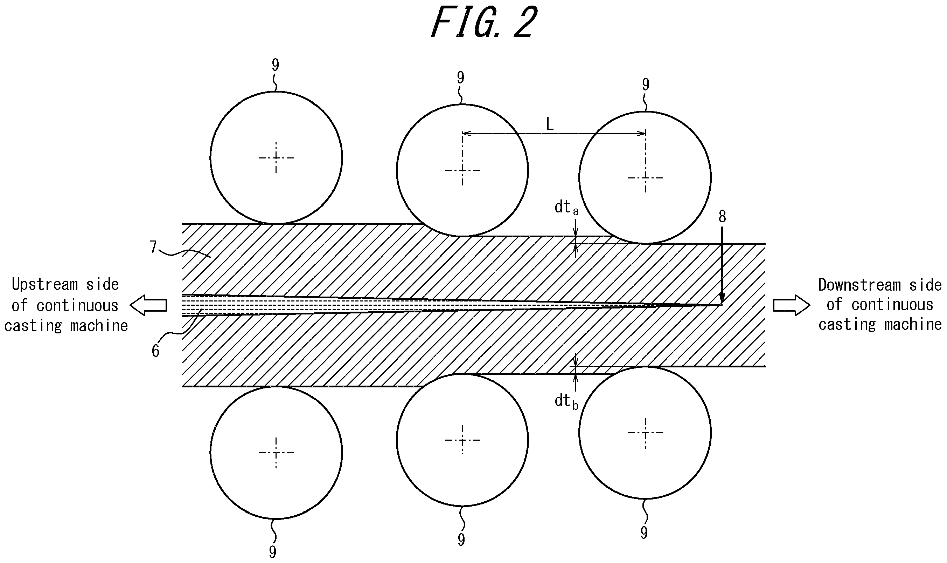

Central segregation of a slab produced by a continuous casting machine illustrated in FIG. 1 is formed as a result of alloying elements concentrating into molten steel at the solid-liquid phase interface during solidification progress and the significantly concentrated molten steel solidifying at the final solidification position. Accordingly, by gradually performing reduction rolling upstream from the final solidification position of the slab in the continuous casting machine so that the roll gap decreases from upstream to downstream in the continuous casting line as illustrated in FIG. 2, the molten steel concentrated with the alloying elements is drifted upstream, and the already solidified part is annihilated, with it being possible to reduce central segregation. To achieve the effect, it is necessary to perform, upstream from the final solidification position of the slab, light reduction rolling with a rolling reduction gradient of 0.4 mm/m or more twice or more, i.e., perform reduction rolling such that $(dt_a + dt_b)/L$ in FIG. 2 is 0.4 mm/m or more twice or more. If the number of times light reduction rolling with a rolling reduction gradient of 0.4 mm/m or more is performed is 1 or less, the effect of drifting the molten steel of the non-solidified part upstream is insufficient, and the segregation reduction effect by the light reduction rolling is insufficient. Therefore, in the (1) continuous casting, light reduction rolling with a rolling reduction gradient of 0.4 mm/m or more is performed twice or more, upstream from the final solidification position of the slab. No upper limit is placed on the number of times light reduction rolling with a rolling reduction gradient of 0.4 mm/m or more is performed, yet the number of times is preferably 30 or less in terms of cost-effectiveness of installation of rolls for light reduction rolling. No upper limit is placed on the rolling reduction gradient of the reduction rolling, yet the rolling reduction gradient is preferably 10.0 mm/m or less in terms of protecting the line of the rolls for light reduction rolling. The final solidification position of the slab is detectable by transmitting an electromagnetic acoustic wave through the slab.

Heating temperature: 1000 °C to 1300 °C

If the heating temperature in the (2) heating is less than 1000 °C, deformation resistance in the hot rolling increases, which causes a decrease in productivity. If the heating temperature is more than 1300 °C, high-adhesion scale forms, so that a descaling failure occurs. This results in degradation in the surface characteristics of the obtained steel plate. The heating temperature is therefore 1000 °C to 1300 °C.

Hot rolling: perform reduction rolling with rolling shape factor of 0.7 or more and rolling reduction of 7 % or more at a plate thickness central part temperature of 950 °C or more three times or more

With only the slab segregation reduction by light reduction rolling in the continuous casting, it is impossible to realize a segregation state excellent in delayed fracture resistance. Hence, the segregation reduction effect in the hot rolling needs to be used together. By performing high reduction rolling with a rolling reduction of 7 % or more at a high temperature of 950 °C or more on the steel three times or more, the segregation reduction effect by facilitating atomic diffusion through strain introduction and austenite microstructure recrystallization is achieved. If the rolling temperature is 950 °C or less or the number of times reduction rolling with a rolling reduction of 7 % or more is performed is less than 3, microstructure recrystallization is insufficient, and so the segregation reduction effect cannot be achieved. No upper limit is placed on the rolling reduction, yet the rolling reduction is preferably 40 % or less in terms of mill protection. Typically, when the carbon concentration in steel is high, the temperature range between liquidus temperature and solidus temperature widens, and therefore the residence time in the solid-liquid phase coexisting state in which segregation progresses increases, and the central segregation of alloying elements or impurity elements increases. By combining the light reduction rolling and the hot rolling, however, the central segregation can be reduced to such a level that provides favorable delayed fracture resistance, even in the case where the carbon concentration is high as in abrasion-resistant steel.

The strain introduced into the steel plate in the rolling is not uniform in the plate thickness direction, and its distribution in the plate thickness direction depends on the rolling shape factor ($ld/h_m$) defined by the following expression:

$$ld/h_m = \{R(h_i\text{-}h_0)\}^{1/2}/\{(h_i + 2h_0)/3\}$$

where ld is the projected length of the arc of contact, $h_m$ is the average plate thickness, R is the roll radius, $h_i$ is the plate thickness at entry side, and $h_0$ is the plate thickness at exit side. To apply strain by rolling to the plate thickness central part having central segregation, the rolling shape factor (ld/hm) needs to be 0.7 or more. If the rolling shape factor is less than 0.7, the strain applied to the steel plate surface layer during the rolling increases, and the strain introduced into the plate thickness central part of the steel plate decreases, which causes insufficient microstructure recrystallization. In such a case, the required segregation reduction effect cannot be achieved. The rolling shape factor is therefore 0.7 or more. The rolling shape factor can be increased by increasing the roll radius or increasing the rolling reduction. No upper limit is placed on the rolling shape factor, yet the rolling shape factor is preferably 3.5 or less in terms of mill protection.

Reheating quenching temperature: $Ac_3$ to 1050 °C

In the case of performing the reheating quenching, if the heating temperature (reheating quenching temperature) in the (4-1) reheating is less than $Ac_3$ point, the microstructure after the hot rolling remains non-transformed, and a predetermined microstructure mainly composed of martensite cannot be obtained. This causes a decrease in hardness, and thus a decrease in abrasion resistance. If the heating temperature is more than 1050 °C, austenite grains coarsen during the heating, causing the prior austenite grain size after the quenching to be more than 80 $\mu$m. The reheating quenching temperature is, therefore, $Ac_3$ to 1050 °C.

Direct quenching temperature: $Ac_3$ or more

In the case of performing the direct quenching, if the quenching temperature (direct quenching temperature) in the (4) direct quenching is less than $Ac_3$ point, the proportions of microstructures other than martensite increase, and a predetermined microstructure mainly composed of martensite cannot be obtained. This causes a decrease in hardness, and thus a decrease in abrasion resistance. The direct quenching temperature is therefore $Ac_3$ or more. No upper limit is placed on the direct quenching temperature, yet the direct quenching temperature is 1300 °C or less because the upper limit of the heating temperature in the hot rolling is 1300 °C. The "direct quenching temperature" mentioned here is the steel plate surface temperature at the quenching start. The direct quenching temperature can be measured using a radiation thermometer immediately before the quenching.

Average cooling rate from 650 °C to 300 °C: 1 °C/s or more

In each of the case of performing the reheating quenching and the case of performing the direct quenching, if the average cooling rate from 650 °C to 300 °C in the quenching is less than 1 °C/s, ferrite or pearlite microstructure is mixed in the microstructure of the steel plate after the quenching, so that the hardness of the matrix decreases and as a result the abrasion resistance decreases. The average cooling rate from 650 °C to 300 °C in the quenching is therefore 1 °C/s or more. No upper limit is placed on the average cooling rate, yet the average cooling rate is preferably 300 °C/s or less because, in a typical line, the microstructure varies significantly in the rolling direction and the plate transverse direction of the steel plate when the average cooling rate is more than 300 °C/s.

The cooling end temperature in the quenching is not limited, but is preferably 300 °C or less because a cooling end temperature of more than 300 °C may cause a decrease in martensite microstructure ratio and a decrease in the hardness of the steel plate. No lower limit is placed on the cooling end temperature, yet the cooling end temperature is preferably 50 °C or more because production efficiency decreases if cooling is continued needlessly.

In each of the case of performing the reheating quenching and the case of performing the direct quenching, the following may be performed after the quenching:

(5) tempering the quenched hot-rolled steel plate to a temperature of 100 °C to 300 °C.

Tempering temperature: 100 °C to 300 °C

If the tempering temperature in the tempering process is 100 °C or more, the toughness and workability of the steel plate can be improved. If the tempering temperature is more than 300 °C, martensite microstructure softens significantly, and consequently the abrasion resistance decreases. The tempering temperature is therefore 100 °C to 300 °C.

After heating the steel plate to the tempering temperature, the steel plate may be subjected to air cooling. The soaking time in the tempering treatment is not limited, but is preferably 1 min or more in terms of enhancing the tempering effect. Long time soaking, meanwhile, leads to a decrease in hardness, and accordingly the soaking time is preferably 3 hr or less.

EXAMPLES

More detailed description is given below, based on examples. The following examples merely represent preferred examples, and the present disclosure is not limited to these examples.

First, slabs having the chemical compositions listed in Table 1 were produced by the continuous casting method. In the production of some of the slabs, light reduction rolling with a rolling reduction gradient of 0.4 mm/m or more was performed upstream from the final solidification position of the slab, in order to reduce the segregation of the plate thickness central part. The conditions of the light reduction rolling are listed in Table 2. The $Ac_3$ temperature in Table 2 is calculated according to the following expression:

$$Ac_3 \, (°C) = 937 - 5722.765([C]/12.01 - [Ti]/47.87) + 56[Si] - 19.7[Mn] - 16.3[Cu] - 26.6[Ni] - 4.9[Cr] + 38.1[Mo] + 124.8[V] - 136.3[Ti] - 19[Nb] + 3315[B]$$

where [M] is the content (mass%) of element M, and [M] = 0 in the case where element M is not added.

Each obtained slab was then sequentially subjected to the processes of heating, hot rolling, and direct quenching or reheating quenching, thus obtaining a steel plate. Some of the steel plates were further reheated for tempering after the quenching. The treatment conditions in each of the processes are listed in Table 2. Cooling in the quenching was performed by, while passing the steel plate, injecting water of a high flow rate to the front and back surfaces of the steel plate. The cooling rate in the quenching is the average cooling rate from 650 °C to 300 °C calculated by thermal transfer calculation. The cooling was performed to 300 °C or less.

For each of the obtained steel plates, the Mn content and the P content in the plate thickness central segregation area, the volume fraction of martensite, and the prior austenite grain size were measured by the following methods. The measurement results are listed in Table 3.

[Mn content and P content in plate thickness central segregation area]

To produce a measurement sample, a central part of the obtained steel plate in both of the plate transverse direction and the plate thickness direction was cut out in a rectangular parallelepiped shape with a width of 500 mm in the plate transverse direction and a thickness of 3 mm in the plate thickness direction. The cut-out steel was further cut into 20 equal parts in the plate transverse direction, to obtain 20 measurement samples with a width of 25 mm in the plate transverse direction. The surface (a width of 25 mm in the plate transverse direction × a thickness of 3 mm in the plate thickness direction) of the measurement sample orthogonal to the rolling direction was mirror polished, and then immediately quantitative analysis by an electron probe microanalyzer (EPMA) was conducted with the mirror-polished surface as a measurement plane.

The conditions of the EPMA measurement were as follows. The maximum value of (0.04[Mn] + [P]) in the below-mentioned measurement range was taken to be the value of (0.04[Mn] + [P]) in the present disclosure.

(EPMA measurement conditions)

accelerating voltage: 20 kV
irradiation current: 0.5 μA
cumulative time: 0.15 sec
beam diameter: 15 μm
measurement range: height 3 mm × width 25 mm × 20 samples.

[Volume fraction of martensite]

The abrasion resistance of a steel plate mainly depends on the hardness of the surface layer part. Accordingly, a sample was collected from the center of each obtained steel plate in the plate transverse direction so that the observation position was a depth position of 1 mm from the surface. The surface of the sample was mirror polished and further etched with nital, and then an image of a range of 10 mm × 10 mm was captured using a scanning electron microscope (SEM). The captured image was analyzed using an image analyzer to calculate the area fraction of martensite, and the calculated value was taken to be the volume fraction of martensite in the present disclosure.

[Prior austenite grain size]

A measurement sample for the prior austenite grain size was collected from the plate thickness central part having central segregation as an origin of gas cutting cracking, at the center of the steel plate in the width direction. The surface of the sample was mirror polished and further etched with picric acid, and then an image of a range of 10 mm × 10 mm was captured using an optical microscope. The captured image was analyzed using an image analyzer to calculate the prior austenite grain size. Here, the prior austenite grain size was calculated as an equivalent circular diameter.

Furthermore, for each of the obtained steel plates, the hardness and the delayed fracture resistance were evaluated by the following methods. The evaluation results are listed in Table 3.

[Hardness (Brinell hardness)]

The hardness in the surface layer part of the steel plate was measured as an index of the abrasion resistance. A test piece for the measurement was collected from each obtained steel plate so that the observation position was a depth position of 1 mm from the surface of the steel plate. After mirror polishing the surface of the test piece, the Brinell hardness was measured in accordance with JIS Z 2243 (2008). The measurement was performed with a load of 3000 Kgf using tungsten hard balls of 10 mm in diameter.

[Delayed fracture resistance evaluation test]

When a microstructure mainly composed of martensite is heated to about 400 °C, temper embrittlement, i.e., P atoms present near prior austenite grain boundaries diffusing into the prior austenite grain boundaries and thus making the grain boundaries brittle, occurs. Since a higher concentration of P is present in the central segregation area of the steel plate than in the other areas, the temper embrittlement is most noticeable in the central segregation area. In the case of subjecting the steel plate to gas cutting, this temper embrittlement area inevitably appears in the vicinity of the cutting surface. Besides, hydrogen contained in gas used for the gas cutting enters the steel plate from the gas cutting surface, causing hydrogen embrittlement. A delayed fracture after gas cutting originates from cracking of prior austenite grain boundaries that have become significantly brittle due to such temper embrittlement and hydrogen embrittlement.

Hence, to evaluate the delayed fracture resistance after temper embrittlement and hydrogen embrittlement, a test was conducted according to the following procedure. First, the steel plate was heated to 400 °C and then air cooled, to apply temper embrittlement treatment. After this, a JIS No. 14A round bar tensile test piece (JIS Z 2241 (2014)) with a parallel portion diameter of 5 mm and a parallel portion length of 30 mm was collected from the plate thickness central part at the plate width center so that the test piece length was parallel to the plate transverse direction. The round bar tensile test piece was further immersed in a 10 % ammonium thiocyanate solution of 25 °C for 72 hr, to cause the tensile test piece to absorb hydrogen. Subsequently, to prevent the diffusion of hydrogen from the tensile test piece, the surface of the tensile test piece was galvanized to a thickness of 10 $\mu$m to 15 $\mu$m in a plating bath composed of $ZnCl_2$ and $NH_4Cl$. The resultant tensile test piece was subjected to a tensile test with a strain rate of $1.1 \times 10^{-5}$/sec, and the reduction of area after fracture was measured in accordance with JIS Z 2241 (2014). The tensile test was conducted five times each, and the average value of the reductions of area was used for the evaluation. The total hydrogen release amount when a sample subjected to hydrogen absorption under the same conditions as the above-mentioned tensile test piece was heated to 400 °C by a device for thermal desorption analysis of hydrogen was 0.8 ppm to 1.1 ppm.

Table 1

| Steel sample ID | Chemical composition (mass%)[*] | | | | | | | | | | | | | | | | | | | Remarks |
| --- | --- | --- | --- | --- | --- | --- | --- | --- | --- | --- | --- | --- | --- | --- | --- | --- | --- | --- | --- | --- |
| | C | Si | Mn | P | S | Cr | Al | N | Cu | Ni | Nb | Mo | Ti | B | W | V | Ca | Mg | REM | |
| A | 0.12 | 0.3 | 0.82 | 0.023 | 0.0056 | 0.51 | 0.012 | 0.0023 | - | - | - | - | - | - | - | - | - | - | - | Conforming steel |
| B | 0.18 | 0.5 | 1.35 | 0.016 | 0.0026 | 0.35 | 0.024 | 0.0041 | - | - | - | - | - | - | - | - | - | - | - | Conforming steel |
| C | 0.23 | 0.8 | 0.39 | 0.008 | 0.0009 | 1.30 | 0.040 | 0.0018 | - | - | - | - | - | - | - | - | - | - | - | Conforming steel |
| D | 0.21 | 0.4 | 2.61 | 0.012 | 0.0015 | 1.71 | 0.031 | 0.0036 | - | - | 0.022 | - | 0.023 | 0.0033 | - | - | - | - | - | Conforming steel |
| E | 0.14 | 0.2 | 1.84 | 0.004 | 0.0006 | 0.85 | 0.051 | 0.0019 | - | - | - | 0.4 | - | 0.0016 | - | - | 0.0031 | - | - | Conforming steel |
| F | 0.20 | 0.6 | 2.08 | 0.011 | 0.0007 | 1.12 | 0.035 | 0.0037 | - | 2.2 | - | - | - | - | - | - | - | - | - | Conforming steel |
| G | 0.18 | 0.2 | 1.50 | 0.003 | 0.0011 | 1.46 | 0.060 | 0.0036 | - | - | - | - | - | - | - | 0.4 | - | - | - | Conforming steel |
| H | 0.17 | 0.2 | 0.90 | 0.019 | 0.0031 | 0.47 | 0.056 | 0.0028 | - | - | 0.025 | - | - | - | - | - | - | - | - | Conforming steel |
| I | 0.15 | 0.1 | 1.85 | 0.012 | 0.0036 | 0.88 | 0.042 | 0.0016 | - | - | - | - | 0.031 | - | - | - | - | - | - | Conforming steel |
| J | 0.22 | 0.4 | 1.99 | 0.012 | 0.0017 | 0.69 | 0.050 | 0.0028 | - | - | - | - | - | - | - | - | - | - | 0.0085 | Conforming steel |
| K | 0.22 | 0.4 | 2.84 | 0.017 | 0.0018 | 0.76 | 0.039 | 0.0028 | - | - | - | - | 0.0025 | - | - | - | - | - | - | Conforming steel |
| L | 0.19 | 0.5 | 1.40 | 0.015 | 0.0020 | 0.90 | 0.027 | 0.0022 | 0.4 | - | - | - | - | - | - | - | - | - | - | Conforming steel |
| M | 0.14 | 0.7 | 1.38 | 0.012 | 0.0015 | 0.48 | 0.018 | 0.0029 | - | - | - | - | - | - | - | 0.13 | - | - | - | Conforming steel |
| N | 0.19 | 0.3 | 1.62 | 0.014 | 0.0030 | 0.84 | 0.036 | 0.0041 | - | - | - | - | - | - | - | - | 0.0025 | - | - | Conforming steel |
| O | 0.16 | 0.3 | 1.63 | 0.002 | 0.0005 | 0.75 | 0.019 | 0.0045 | - | - | - | 0.5 | - | - | - | - | - | - | - | Conforming steel |
| P | 0.17 | 0.2 | 1.37 | 0.009 | 0.0026 | 0.59 | 0.034 | 0.0026 | - | - | - | - | - | - | - | - | - | 0.0023 | - | Conforming steel |
| Q | 0.08 | 0.3 | 1.72 | 0.015 | 0.0022 | 0.78 | 0.036 | 0.0032 | - | - | - | - | - | - | - | - | - | - | - | Comparative steel |
| R | 0.15 | 0.2 | 1.30 | 0.024 | 0.0040 | 0.92 | 0.041 | 0.0049 | - | - | - | - | - | - | - | - | - | - | - | Conforming steel |
| S | 0.21 | 0.6 | 2.01 | 0.021 | 0.0008 | 1.21 | 0.013 | 0.0027 | - | 0.3 | - | - | - | - | - | - | - | - | - | Conforming steel |
| T | 0.19 | 0.3 | 1.42 | 0.028 | 0.0014 | 1.05 | 0.028 | 0.0033 | - | - | - | 0.4 | - | - | - | - | - | - | - | Comparative steel |

[*] Balance consisting of Fe and inevitable impurities.

Underlines indicate outside presently disclosed range.

Table 2

| No. | Steel sample ID | Continuous casting Number of times of light reduction rolling*1 | Heating Heating temperature (°C) | Hot rolling Finalplate thickness (mm) | Hot rolling Number of times of high reduction rolling*2 | Quenching Reheating quenching temperature (°C) | Quenching Direct quenching temperature (°C) | Quenching Ac₃ (°C) | Quenching Cooling rate*3 (°C/sec) | Tempering Tempering temperature (°C) | Remarks |
|---|---|---|---|---|---|---|---|---|---|---|---|
| 1 | A | 4 | 1050 | 28 | 5 | 930 | - | 878 | 45 | - | Example |
| 2 | B | 6 | 1100 | 16 | 7 | 880 | - | 851 | 85 | - | Example |
| 3 | C | 3 | 1200 | 20 | 3 | 890 | - | 858 | 71 | - | Example |
| 4 | D | 3 | 1170 | 60 | 4 | 840 | - | 810 | 10 | 200 | Example |
| 5 | E | 4 | 1120 | 85 | 3 | 1010 | - | 862 | 5 | - | Example |
| 6 | F | 2 | 1070 | 40 | 5 | 840 | - | 770 | 26 | 250 | Example |
| 7 | G | 4 | 1030 | 32 | 4 | 860 | - | 826 | 35 | - | Example |
| 8 | H | 3 | 1080 | 51 | 3 | 880 | - | 847 | 16 | 150 | Example |
| 9 | I | 5 | 1100 | 28 | 3 | 880 | - | 830 | 55 | - | Example |
| 10 | J | 4 | 1130 | 76 | 3 | 860 | - | 812 | 8 | - | Example |
| 11 | K | 3 | 1150 | 36 | 3 | 860 | - | 803 | 29 | 270 | Example |
| 12 | L | 6 | 1180 | 48 | 5 | 870 | - | 836 | 18 | - | Example |
| 13 | M | 4 | 1050 | 30 | 3 | 930 | - | 896 | 46 | - | Example |
| 14 | N | 3 | 1090 | 60 | 3 | 850 | - | 827 | 11 | 200 | Example |
| 15 | O | 2 | 1080 | 30 | 3 | 900 | - | 861 | 42 | - | Example |
| 16 | P | 3 | 1120 | 47 | 3 | 860 | - | 837 | 18 | - | Example |
| 17 | Q | 4 | 1070 | 26 | 3 | 910 | - | 878 | 50 | - | Comparative Example |
| 18 | R | 0 | 1050 | 39 | 3 | 870 | - | 847 | 26 | 200 | Comparative Example |
| 19 | S | 2 | 1130 | 32 | 1 | 850 | - | 817 | 37 | - | Comparative Example |

13

EP 3 446 809 B1

(continued)

| No. | Steel sample ID | Continuous casting — Number of times of light reduction rolling*1 | Heating — Heating temperature (°C) | Hot rolling — Finalplate thickness (mm) | Hot rolling — Number of times of high reduction rolling*2 | Quenching — Reheating quenching temperature (°C) | Quenching — Direct quenching temperature (°C) | Quenching — $Ac_3$ (°C) | Quenching — Cooling rate*3 (°C/sec) | Tempering — Tempering temperature (°C) | Remarks |
|---|---|---|---|---|---|---|---|---|---|---|---|
| 20 | T | 2 | 1030 | 46 | 3 | 880 | - | 845 | 17 | - | Comparative Example |
| 21 | B | 6 | 1100 | 40 | 3 | 820 | - | 851 | 25 | - | Comparative Example |
| 22 | A | 4 | 1070 | 60 | 4 | 1070 | - | 878 | 11 | - | Comparative Example |
| 23 | C | 3 | 1180 | 63 | 5 | 900 | - | 858 | 0.1 | 150 | Comparative Example |
| 24 | D | 3 | 1150 | 32 | 3 | 870 | - | 810 | 36 | 350 | Comparative Example |
| 25 | E | 4 | 1150 | 25 | 5 | - | 886 | 862 | 49 | - | Example |
| 26 | G | 4 | 1060 | 60 | 3 | - | 849 | 826 | 9 | 170 | Example |
| 27 | H | 3 | 1180 | 16 | 6 | - | 857 | 847 | 85 | 150 | Example |
| 28 | A | 4 | 1100 | 45 | 7 | - | 916 | 878 | 20 | - | Example |
| 29 | K | 2 | 1130 | 50 | 0 | - | 904 | 803 | 12 | - | Comparative Example |
| 30 | A | 0 | 1080 | 70 | 3 | - | 921 | 878 | 8 | - | Comparative Example |
| 31 | B | 6 | 1200 | 45 | 4 | - | 880 | 851 | 0.2 | - | Comparative Example |
| 32 | M | 4 | 1030 | 32 | 4 | - | 805 | 896 | 35 | - | Comparative Example |

(continued)

| No. | Steel sample ID | Continuous casting | Heating | Hot rolling | | Quenching | | | | Tempering | Remarks |
|---|---|---|---|---|---|---|---|---|---|---|---|
| | | Number of times of light reduction rolling *1 | Heating temperature (°C) | Final plate thickness (mm) | Number of times of high reduction rolling *2 | Reheating quenching temperature (°C) | Direct quenching temperature (°C) | $Ac_3$ (°C) | Cooling rate *3 (°C/sec) | Tempering temperature (°C) | |
| 33 | I | 5 | 1120 | 25 | 3 | - | 869 | 830 | 47 | <u>370</u> | Comparative Example |

*1 Number of times light reduction rolling with rolling reduction gradient of 0.4 mn/m or more was performed upstream from final solidification position of slab.
*2 Number of times reduction rolling with rolling shape ratio of 0.7 or more and rolling reduction of 7% or more at plate thickness central part temperature of 950°C or more was performed.
*3 Average cooling rate from 650 to 300°C.
Underlines indicate outside presently disclosed range.

Table 3

| No. | Chemical composition | Central segregation | Microstructure | | Evaluation | | Remarks |
|---|---|---|---|---|---|---|---|
| | Steelsample ID | 0.04[Mn]+ [P] | Volume fraction of martensite (%) | Prior austenite grain size ($\mu$m) | Brinell hardness (HBW 10/3000) | Reduction of area* (%) | |
| 1 | A | 0.46 | 99 | 24 | 372 | 14 | Example |
| 2 | B | 0.32 | 100 | 19 | 438 | 20 | Example |
| 3 | C | 0.17 | 100 | 20 | 474 | 24 | Example |
| 4 | D | 0.39 | 99 | 14 | 438 | 16 | Example |
| 5 | E | 0.20 | 98 | 20 | 398 | 26 | Example |
| 6 | F | 0.35 | 99 | 15 | 422 | 15 | Example |
| 7 | G | 0.14 | 100 | 18 | 436 | 23 | Example |
| 8 | H | 0.40 | 98 | 19 | 420 | 14 | Example |
| 9 | I | 0.33 | 100 | 15 | 385 | 18 | Example |
| 10 | J | 0.35 | 97 | 17 | 465 | 15 | Example |
| 11 | K | 0.50 | 98 | 18 | 428 | 11 | Example |
| 12 | L | 0.34 | 98 | 17 | 466 | 17 | Example |
| 13 | M | 0.31 | 97 | 21 | 382 | 19 | Example |
| 14 | N | 0.36 | 97 | 18 | 416 | 16 | Example |
| 15 | O | 0.16 | 99 | 22 | 405 | 28 | Example |
| 16 | P | 0.26 | 98 | 17 | 417 | 20 | Example |
| 17 | <u>Q</u> | 0.39 | 95 | 22 | <u>292</u> | 26 | Comparative Example |
| 18 | R | <u>0.61</u> | 99 | 18 | 386 | 3 | Comparative Example |
| 19 | S | <u>0.56</u> | 100 | 16 | 440 | 5 | Comparative Example |
| 20 | <u>T</u> | <u>0.60</u> | 98 | 18 | 428 | 3 | Comparative Example |
| 21 | B | 0.36 | <u>74</u> | 15 | <u>298</u> | 28 | Comparative Example |
| 22 | A | 0.49 | 99 | <u>89</u> | 375 | 6 | Comparative Example |
| 23 | C | 0.15 | <u>0</u> | - | <u>184</u> | 32 | Comparative Example |
| 24 | D | 0.42 | 98 | 18 | <u>334</u> | 17 | Comparative Example |
| 25 | E | 0.19 | 97 | 36 | 392 | 17 | Example |
| 26 | G | 0.17 | 100 | 62 | 418 | 18 | Example |
| 27 | H | 0.36 | 99 | 28 | 406 | 18 | Example |
| 28 | A | 0.44 | 99 | 49 | 380 | 14 | Example |

(continued)

| No. | Chemical composition | Central segregation | Microstructure | | Evaluation | | Remarks |
|---|---|---|---|---|---|---|---|
| | Steel sample ID | 0.04[Mn]+ [P] | Volume fraction of martensite (%) | Prior austenite grain size (μm) | Brinell hardness (HBW 10/3000) | Reduction of area* (%) | |
| 29 | K | 0.57 | 98 | 53 | 436 | 4 | Comparative Example |
| 30 | A | 0.58 | 99 | 73 | 369 | 4 | Comparative Example |
| 31 | B | 0.36 | 0 | - | 143 | 25 | Comparative Example |
| 32 | M | 0.29 | 83 | 39 | 330 | 17 | Comparative Example |
| 33 | I | 0.36 | 98 | 39 | 286 | 18 | Comparative Example |
| * Reduction of area in tensile test after subjection to temper embrittlement treatment and subsequent hydrogen embrittlement treatment. Underlines indicate outside presently disclosed range. | | | | | | | |

As can be understood from the results in Table 3, each abrasion-resistant steel plate satisfying the conditions according to the present disclosure had both excellent hardness of 360 HBW 10/3000 or more in Brinell hardness and excellent ductility, i.e. delayed fracture resistance, of 10 % or more in reduction of area in the tensile test after subjection to temper embrittlement treatment and hydrogen embrittlement treatment. Since the reduction of area is preferably as high as possible, no upper limit is placed on the reduction of area, yet the reduction of area is typically 50 % or less. On the other hand, each comparative example steel plate not satisfying the conditions according to the present disclosure was inferior in at least one of hardness and delayed fracture resistance.

For example, steel plate No. 17 with low C content had poor hardness, due to low solute C content in martensite matrix. Steel plates No. 18 and 30 had poor delayed fracture resistance, because the light reduction rolling conditions in the continuous casting were inappropriate and so the degree of central segregation of Mn and P which are intergranular embrittlement elements was high. Steel plates No. 19 and 29 had poor delayed fracture resistance, because high reduction rolling in the hot rolling was insufficient, and so the degree of central segregation of Mn and P which are intergranular embrittlement elements was high. Steel plate No. 20 with high P content had poor delayed fracture resistance, due to high P concentration in the central segregation area. Steel plate No. 21 had poor hardness because the reheating quenching temperature was less than $Ac_3$ and as a result the volume fraction of martensite decreased. Steel plate No. 22 had poor delayed fracture resistance because the prior austenite grain size increased due to high reheating quenching temperature. Steel plate No. 23 had poor hardness because martensite transformation did not occur due to low cooling rate in the reheating quenching. Steel plates No. 24 and 33 had poor hardness because softening occurred due to high tempering temperature. Steel plate No. 31 had poor hardness because martensite transformation did not occur due to low cooling rate in the direct quenching. Steel plate No. 32 had poor hardness because the direct quenching temperature was less than $Ac_3$ and as a result the volume fraction of martensite decreased.

REFERENCE SIGNS LIST

1    continuous casting machine
2    tundish
3    molten steel
4    mold
5    roll
6    non-solidified layer

7    slab (solidified area)
8    final solidification position
9    rolling mill roll

**Claims**

**1.** An abrasion-resistant steel plate comprising:

a chemical composition containing, in mass%,

C: 0.10 % to 0.23 %,
Si: 0.01 % to 1.0 %,
Mn: 0.30 % to 3.00 %,
P: 0.025 % or less,
S: 0.02 % or less,
Cr: 0.01 % to 2.00 %,
Al: 0.001 % to 0.100 %,
N: 0.01 % or less,
optionally one or more selected from the group consisting of
Cu: 0.01 % to 2.0 %,
Ni: 0.01 % to 5.0 %,
Mo: 0.01 % to 3.0 %,
Nb: 0.001 % to 0.100 %,
Ti: 0.001 % to 0.050 %,
B: 0.0001 % to 0.0100 %,
V: 0.001 % to 1.00 %,
W: 0.01 % to 1.50 %,
Ca: 0.0001 % to 0.0200 %,
Mg: 0.0001 % to 0.0200 %, and
REM: 0.0005 % to 0.0500 %, and
a balance consisting of Fe and inevitable impurities; and

a microstructure in which a volume fraction of martensite at a depth of 1 mm from a surface of the abrasion-resistant steel plate is 90 % or more, the volume fraction of martensite being measured by: collecting a sample from the center of the steel plate in the plate transverse direction so that the observation position is a depth position of 1 mm from the surface; mirror polishing and further etching the surface of the sample with nital; capturing an image of a range of 10 mm x 10 mm of the sample using a scanning electron microscope; and analyzing the captured image using an image analyzer to calculate the area fraction of martensite, the calculated value being taken to be the volume fraction of martensite, and
a prior austenite grain size at the mid-thickness of the abrasion-resistant steel plate is 80 $\mu$m or less, the prior austenite grain size being measured by: collecting a measurement sample from the plate thickness central part having central segregation as an origin of gas cutting cracking, at the center of the steel plate in the width direction; mirror polishing and further etching the sample with picric acid; capturing an image of a range of 10 mm $\times$ 10 mm using an optical microscope; and analyzing the image using an image analyzer to calculate the prior austenite grain size, wherein the prior austenite grain size is calculated as an equivalent circular diameter; wherein hardness at a depth of 1 mm from the surface of the abrasion-resistant steel plate is 360 to 490 HBW 10/3000 in Brinell hardness, the Brinell hardness being measured by: collecting a test piece for the measurement from the steel plate so that the observation position is a depth position of 1 mm from the surface of the steel plate; and, after mirror polishing the surface of the test piece, measuring the Brinell hardness in accordance with JIS Z 2243 (2008) with a load of 29420 N (3000 kgf) using tungsten hard balls of 10 mm in diameter; and a concentration [Mn] of Mn in mass% and a concentration [P] of P in mass% in a plate thickness central segregation area satisfy the following Expression (1):

$$0.04[\text{Mn}] + [\text{P}] < 0.55 \qquad \ldots (1),$$

as measured by: producing a measurement sample by cutting out a central part of the steel plate in both of the plate transverse direction and the plate thickness direction in a rectangular parallelopiped shape with a width of 500 mm in the plate transverse direction and a thickness of 3 mm in the plate thickness direction; cutting the cut-out steel into 20 equal parts in the plate transverse direction, to obtain 20 measurement samples with a width of 25 mm in the plate transverse direction; mirror polishing the surface, a width of 25 mm in the plate transverse direction × a thickness of 3 mm in the plate thickness direction, of the measurement sample orthogonal to the rolling direction; and then immediately conducting quantitative analysis by an electron probe microanalyzer (EPMA) with the mirror-polished surface as a measurement plane, the conditions of the EPMA measurement being as follows: accelerating voltage: 20 kV; irradiation current: 0.5 $\mu$A; cumulative time: 0.15 sec; beam diameter: 15 $\mu$m; and measurement range: height 3 mm × width 25 mm × 20 samples; wherein the maximum value of (0.04[Mn] + [P]) measured is taken to be the value of (0.04[Mn] + [P]).

2. The abrasion-resistant steel plate according to claim 1,
wherein a reduction of area in a tensile test after subjection to temper embrittlement treatment and subsequent hydrogen embrittlement treatment is 10 % or more, wherein the reduction of area is measured by: heating the steel plate to 400 °C and then air cooling the steel plate, to apply temper embrittlement treatment; collecting a JIS No. 14A round bar tensile test piece, JIS Z 2241 (2014), with a parallel portion diameter of 5 mm and a parallel portion length of 30 mm from the plate thickness central part at the plate width center so that the test piece length is parallel to the plate transverse direction; immersing the round bar tensile test piece in a 10 % ammonium thiocyanate solution of 25 °C for 72 hr, to cause the tensile test piece to absorb hydrogen; to prevent the diffusion of hydrogen from the tensile test piece, galvanizing the surface of the tensile test piece to a thickness of 10 $\mu$m to 15 $\mu$m in a plating bath composed of $ZnCl_2$ and $NH_4Cl$; subjecting the resultant tensile test piece to a tensile test with a strain rate of $1.1 \times 10^{-5}$/sec, and measuring the reduction of area after fracture in accordance with JIS Z 2241 (2014); and conducting the tensile test five times and using the average value of the reductions of area as the reduction of area.

3. A method of producing the abrasion-resistant steel plate according to claim 1 or claim 2, the method comprising:

subjecting molten steel to continuous casting, to form a slab;
heating the slab to 1000 °C to 1300 °C;
subjecting the heated slab to hot rolling in which reduction rolling with a rolling shape factor of 0.7 or more and a rolling reduction of 7 % or more at a plate thickness central part temperature of 950 °C or more is performed three times or more, to obtain a hot-rolled steel plate, wherein the rolling shape factor ($ld/h_m$) is defined by the expression:

$$ld/h_m = \{R(h_i - h_0)\}^{1/2}/\{(h_i + 2h_0)/3\},$$

where Id is the projected length of the arc of contact, $h_m$ is the average plate thickness, R is the roll radius, $h_i$ is the plate thickness at entry side, and ho is the plate thickness at exit side, in each roll pass;
reheating the hot-rolled steel plate to a reheating quenching temperature; and
quenching the reheated hot-rolled steel plate,
wherein the slab has the chemical composition according to claim 1,
in the continuous casting, light reduction rolling with a rolling reduction gradient of 0.4 mm/m or more is performed twice or more, upstream from a final solidification position of the slab,
the reheating quenching temperature is $Ac_3$ to 1050 °C, wherein $Ac_3$ is calculated according to the following expression:

$$Ac_3\ (°C) = 937 - 5722.765([C]/12.01 - [Ti]/47.87) + 56[Si] - 19.7[Mn] - 16.3[Cu] - 26.6[Ni] - 4.9[Cr] + 38.1[Mo] + 124.8[V] - 136.3[Ti] - 19[Nb] + 3315[B]$$

where [M] is the content in mass% of element M, and [M] = 0 in the case where element M is not added, and an average cooling rate from 650 °C to 300 °C in the quenching is 1 °C/s or more.

4. The method according to claim 3, further comprising tempering the quenched hot-rolled steel plate at a tempering temperature of 100 °C to 300 °C.

5. A method of producing the abrasion-resistant steel plate according to claim 1 or claim 2, the method comprising:

subjecting molten steel to continuous casting, to form a slab;
heating the slab to 1000 °C to 1300 °C;
subjecting the heated slab to hot rolling in which reduction rolling with a rolling shape factor of 0.7 or more and a rolling reduction of 7 % or more at a plate thickness central part temperature of 950 °C or more is performed three times or more, to obtain a hot-rolled steel plate, wherein the rolling shape factor ($ld/h_m$) is defined by the expression:

$$ld/h_m = \{R(h_i-h_0)\}^{1/2}/\{(h_i + 2h_0)/3\},$$

where Id is the projected length of the arc of contact, $h_m$ is the average plate thickness, R is the roll radius, $h_i$ is the plate thickness at entry side, and $h_0$ is the plate thickness at exit side, in each roll pass; and
direct quenching the hot-rolled steel plate,
wherein the slab has the chemical composition according to claim 1,
in the continuous casting, light reduction rolling with a rolling reduction gradient of 0.4 mm/m or more is performed twice or more, upstream from a final solidification position of the slab,
a direct quenching temperature in the direct quenching is $Ac_3$ or more, wherein $Ac_3$ is calculated according to the following expression:

$$Ac_3\ (°C) = 937 - 5722.765([C]/12.01 - [Ti]/47.87) + 56[Si] - 19.7[Mn] - 16.3[Cu] - 26.6[Ni] - 4.9[Cr] + 38.1[Mo] + 124.8[V] - 136.3[Ti] - 19[Nb] + 3315[B]$$

where [M] is the content in mass% of element M, and [M] = 0 in the case where element M is not added, and an average cooling rate from 650 °C to 300 °C in the direct quenching is 1 °C/s or more.

6. The method according to claim 5, further comprising
tempering the quenched hot-rolled steel plate at a tempering temperature of 100 °C to 300 °C.

**Patentansprüche**

1. Abriebfestes Stahlblech, umfassend:

eine chemische Zusammensetzung, enthaltend in Massen-%,

C: 0,10 % bis 0,23 %,
Si: 0,01 % bis 1,0 %,
Mn: 0,30 % bis 3,00 %,
P: 0,025 % oder weniger,
S: 0,02 % oder weniger,
Cr: 0,01 % bis 2,00 %,
Al: 0,001 % bis 0,100 %,
N: 0,01 % oder weniger,

gegebenenfalls eines oder mehrere, ausgewählt aus der Gruppe bestehend aus

Cu: 0,01 % bis 2,0 %,
Ni: 0,01 % bis 5,0 %,
Mo: 0,01 % bis 3,0 %,
Nb: 0,001 % bis 0,100 %,
Ti: 0,001 % bis 0,050 %,
B: 0,0001 % bis 0,0100 %,
V: 0,001 % bis 1,00 %,

W: 0,01 % bis 1,50 %,
Ca: 0,0001 % bis 0,0200 %,
Mg: 0,0001 % bis 0,0200 %, und
REM: 0,0005 % bis 0,0500 %, und

einen Rest, der aus Fe und unvermeidbaren Verunreinigungen besteht; und
eine Mikrostruktur, in der ein Volumenanteil von Martensit in einer Tiefe von 1 mm von einer Oberfläche des abriebfesten Stahlblechs 90 % oder mehr beträgt, wobei der Volumenanteil von Martensit gemessen wird, durch: Entnehmen einer Probe aus der Mitte des Stahlblechs in Blechquerrichtung, so dass die Beobachtungsposition eine Tiefenposition von 1 mm von der Oberfläche ist; Hochglanzpolieren und weiter Ätzen der Oberfläche der Probe mit Nital; Aufnehmen eines Bilds in einem Bereich von 10 mm x 10 mm oder der Probe unter Verwendung eines Rasterelektronenmikroskops; und Analysieren des aufgenommenen Bilds unter Verwendung eines Bildanalysators, um den Flächenanteil von Martensit zu berechnen, wobei der berechnete Wert als Volumenanteil von Martensit angenommen wird; und
eine vorherige Austenitkorngröße an der mittleren Dicke des abriebfesten Stahlblechs 80 $\mu$m oder weniger beträgt, wobei die vorherige Austenitkorngröße gemessen wird durch: Entnehmen einer Messprobe des zentralen Teils der Blechdicke mit einer zentralen Entmischung als Ursprung der durch das Brennschneiden verursachten Rissbildung aus der Mitte des Stahlblechs in Breitenrichtung; Hochglanzpolieren und weiter Ätzen der Probe mit Pikrinsäure; Aufnehmen eines Bilds mit einem Bereich von 10 mm x 10 mm unter Verwendung eines optischen Mikroskops; und Analysieren des Bilds unter Verwendung eines Bildanalysators, um die vorherige Austenitkorngröße zu berechnen, wobei die vorherige Austenitkorngröße als äquivalenter Kreisdurchmesser berechnet wird;
wobei die Härte in einer Tiefe von 1 mm von der Oberfläche des abriebfesten Stahlblechs 360 bis 490 HBW 10/3000 in Brinell-Härte beträgt, wobei die Brinell-Härte gemessen wird durch: Entnehmen eines Prüfstücks für die Messung aus dem Stahlblech, so dass die Beobachtungsposition in einer Tiefenposition von 1 mm von der Oberfläche des Stahlblechs ist; und nach dem Hochglanzpolieren der Oberfläche des Prüfstücks, Messen der Brinell-Härte gemäß JIS Z 2243 (2008) mit einer Last von 29420 N (3000 kgf) unter Verwendung von Hartmetallkugeln aus Wolfram mit 10 mm Durchmesser; und
eine Konzentration [Mn] von Mn in Massen-% und eine Konzentration [P] von P in Massen-% in einem zentralen Entmischungsbereich den folgenden Ausdruck (1) erfüllen:

$$0,04[Mn] + [P] < 0,55 \dots (1),$$

wie gemessen durch: Herstellen einer Messprobe durch Ausschneiden eines zentralen Teils des Stahlblechs sowohl in Blechquerrichtung als auch in Blechdickenrichtung in einer rechteckigen Parallelopipedform mit einer Breite von 500 mm in Blechquerrichtung und einer Dicke von 3 mm in Blechdickenrichtung; Schneiden des ausgeschnittenen Stahls in 20 gleiche Teile in Blechquerrichtung, um 20 Messproben mit einer Breite von 25 mm in Blechquerrichtung zu erhalten; Hochglanzpolieren der Oberfläche in einer Breite von 25 mm in Blechquerrichtung x einer Dicke von 3 mm in Blechdickenrichtung der Messprobe senkrecht zur Walzrichtung; und dann sofort Durchführen einer quantitativen Analyse mit einem Elektronensonden-Miroanalysator (EPMA) mit der hochglanzpolierten Oberfläche als Messebene, wobei die Bedingungen der EPMA-Messung wie folgt sind: Beschleunigungsspannung: 20 kV; Bestrahlungsstrom: 0,5 $\mu$A; kumulative Zeit: 0.15 sec; Strahldurchmesser: 15 $\mu$m; und Messbereich: Höhe 3 mm $\times$ Breite 25 mm $\times$ 20 Proben; wobei der gemessene Maximalwert von (0,04[Mn] + [P]) als Wert von (0,04[Mn] + [P]) angenommen wird.

**2.** Abriebfestes Stahlblech nach Anspruch 1, wobei eine Flächenreduktion in einem Zugversuch nach einer Temperversprödungsbehandlung und einer anschließenden Wasserstoffversprödungsbehandlung 10 % oder mehr beträgt, wobei die Flächenreduktion gemessen wird durch: Erwärmen des Stahlblechs auf 400 °C und dann Luftkühlen des Stahlblechs, um eine Temperversprödungsbehandlung anzuwenden; Entnehmen eines JIS-Nr.-14A-Rundstab-Zugprüfstücks, JIS Z 2241 (2014), mit einem parallelen Abschnittsdurchmesser von 5 mm und einer parallelen Abschnittslänge von 30 mm aus dem zentralen Teil der Blechdicke in der Mitte der Blechbreite, so dass die Länge des Prüfstücks parallel zur Blechquerrichtung ist; Eintauchen des Rundstab-Zugprüfstücks in eine 10%-ige Ammoniumthiocyanatlösung mit 25 °C für 72 Std., um zu bewirken, dass das Zugprüfstück Wasserstoff absorbiert; zum Verhindern der Diffusion von Wasserstoff aus dem Zugprüfstück, Galvanisieren der Oberfläche des Zugprüfstücks auf eine Dicke von 10 $\mu$m bis 15 $\mu$m in einem Plattierungsbad bestehend aus $ZnCl_2$ und $NH_4Cl$; Unterziehen des resultierenden Zugprüfstücks einem Zugversuch mit einer Dehnungsrate von 1,1 $\times$ 10$^{-5}$/sec, und Messen der Flächenreduktion nach dem Bruch gemäß JIS Z 2241 (2014); und Durchführen des Zugversuchs fünf Mal und unter Verwendung des Durchschnittswerts der Flächenreduktionen als Flächenreduktion.

3. Verfahren zur Herstellung des abriebfesten Stahlblechs nach Anspruch 1 oder Anspruch 2, wobei das Verfahren umfasst:

Stranggießen einer Stahlschmelze, um eine Bramme zu bilden;
Erwärmen der Bramme auf 1.000 °C bis 1.300 °C;
Warmwalzen der erwärmten Bramme, wobei Reduktionswalzen mit einem Walzformfaktor von 0,7 oder mehr und einer Walzreduktion von 7 % oder mehr bei einer Temperatur in einem mittleren Teil der Blechdicke von 950 °C oder mehr drei Mal oder öfter durchgeführt wird, um ein warmgewalztes Stahlblech zu erhalten, wobei der Walzformfaktor ($ld/h_m$) durch den folgenden Ausdruck definiert ist:

$$ld/h_m = \{R \ (h_i - h_0)\}^{1/2}/\{(h_i + 2h_0)/3\},$$

wobei ld die projizierte Länge des Kontaktbogens ist, $h_m$ die durchschnittliche Blechdicke ist, R der Walzenradius ist, $h_i$ die Blechdicke an der Eingangsseite ist, und ho die Blechdicke an der Ausgangsseite ist, in jedem Walzendurchgang;
Wiedererwärmen des warmgewalzten Stahlblechs auf eine Anlasstemperatur; und
Abschrecken des wiedererwärmten warmgewalzten Stahlblechs,
wobei die Bramme die chemische Zusammensetzung nach Anspruch 1 aufweist,
wobei beim Stranggießen, ein leichtes Reduktionswalzen mit einem Walzreduktionsgradienten von 0,4 mm/m oder mehr zweimal oder öfter stromaufwärts einer endgültigen Erstarrungsposition der Bramme durchgeführt wird,
die Anlasstemperatur $Ac_3$ bis 1.050 °C ist, wobei $Ac_3$ gemäß dem folgenden Ausdruck berechnet wird:

$$Ac_3 \ (°C) = 937 - 5722,765([C]/12,01 - [Ti]/47,87) + 56[Si] - 19,7[Mn] - 16,3[Cu] - 26,6[Ni] - 4,9[Cr] + 38,1[Mo] + 124,8[V] - 136,3[Ti] - 19[Nb] + 3315[B]$$

wobei [M] der Gehalt in Massen-% von Element M ist, und [M] = 0 ist, wenn das Element M nicht hinzugefügt wird, und
die durchschnittliche Abkühlrate von 650 °C bis 300 °C beim Abschrecken 1 °C/s oder mehr beträgt.

4. Verfahren nach Anspruch 3, ferner umfassend das Tempern des abgeschreckten warmgewalzten Stahlblechs bei einer Tempertemperatur von 100 °C bis 300 °C.

5. Verfahren zur Herstellung des abriebfesten Stahlblechs nach Anspruch 1 oder Anspruch 2, wobei das Verfahren umfasst:

Stranggießen einer Stahlschmelze, um eine Bramme zu bilden;
Erwärmen der Bramme auf 1.000 °C bis 1.300 °C;
Warmwalzen der erwärmten Bramme, wobei Reduktionswalzen mit einem Walzformfaktor von 0,7 oder mehr und einer Walzreduktion von 7 % oder mehr bei einer Temperatur in einem mittleren Teil der Blechdicke von 950 °C oder mehr drei Mal oder öfter durchgeführt wird, um ein warmgewalztes Stahlblech zu erhalten; wobei der Walzformfaktor ($ld/h_m$) durch den folgenden Ausdruck definiert ist:

$$ld/h_m = \{R \ (h_i - h_0)\}^{1/2}/\{(h_i + 2h_0)/3\},$$

wobei ld die projizierte Länge des Kontaktbogens ist, $h_m$ die durchschnittliche Blechdicke ist, R der Walzenradius ist, $h_i$ die Blechdicke an der Eingangsseite ist, und ho die Blechdicke an der Ausgangsseite ist, in jedem Walzendurchgang; und
direktes Abschrecken des warmgewalzten Stahlblechs,
wobei die Bramme die chemische Zusammensetzung nach Anspruch 1 aufweist, wobei beim Stranggießen ein leichtes Reduktionswalzen mit einem Walzreduktionsgradienten von 0,4 mm/m oder mehr zweimal oder öfter durchgeführt wird, stromaufwärts einer endgültigen Erstarrungsposition der Bramme,
eine direkte Abschrecktemperatur in dem direkten Abschrecken Ac$_3$ oder mehr beträgt,
wobei Ac$_3$ gemäß dem folgenden Ausdruck berechnet ist:

$$\text{Ac}_3 \ (°C) = 937 - 5722,765([C]/12,01 - [Ti]/47,87) + 56[Si] - 19,7[Mn] - 16,3[Cu] - 26,6[Ni] - 4,9[Cr] + 38,1[Mo] + 124,8[V] - 136,3[Ti] - 19[Nb] + 3315[B]$$

wobei [M] der Gehalt in Massen-% von Element M ist, und [M] = 0 ist, wenn das Element M nicht hinzugefügt wird, und
die durchschnittliche Abkühlrate von 650 °C bis 300 °C beim Abschrecken 1 °C/s oder mehr beträgt.

6. Verfahren nach Anspruch 5, ferner umfassend das Tempern des abgeschreckten warmgewalzten Stahlblechs bei einer Tempertemperatur von 100 °C bis 300 °C.

**Revendications**

1. Tôle d'acier résistante à l'abrasion comprenant :

une composition chimique contenant, en % en masse,

C : 0,10 % à 0,23 %,
Si : 0,01 % à 1,0 %,
Mn : 0,30 % à 3,00 %,
P : 0,025 % ou moins,
S : 0,02 % ou moins,
Cr : 0,01 % à 2,00 %,
Al : 0,001 % à 0,100 %,
N : 0,01 % ou moins,

optionnellement un ou plusieurs choisis dans le groupe constitué de

Cu : 0,01 % à 2,0 %,
Ni : 0,01 % à 5,0 %,
Mo : 0,01 % à 3,0 %,
Nb : 0,001 % à 0,100 %,
Ti : 0,001 % à 0,050 %,
B : 0,0001 % à 0,0100 %,
V : 0,001 % à 1,00 %,
W : 0,01 % à 1,50 %,
Ca : 0,0001 % à 0,0200 %,
Mg : 0,0001 % à 0,0200 %, et
terres rares : 0,0005 % à 0,0500 %, et

un reste constitué de Fe et d'impuretés inévitables ; et
une microstructure dans laquelle un pourcentage volumique de martensite à une profondeur de 1 mm à partir d'une surface de la tôle d'acier résistante à l'abrasion est de 90 % ou plus, le pourcentage volumique de martensite étant mesuré par : collecte d'un échantillon à partir du centre de la tôle d'acier dans la direction transversale de la tôle de sorte que la position d'observation est une position en profondeur de 1 mm à partir de la surface ; polissage miroir et attaque additionnelle de la surface de l'échantillon avec du nital ; capture d'une image d'une plage de 10 mm x 10 mm de l'échantillon en utilisant un microscope électronique à balayage ; et analyse de l'image capturée en utilisant un analyseur d'image pour calculer le pourcentage surfacique de martensite, la valeur calculée étant prise comme étant le pourcentage volumique de martensite ; et

une taille de grain d'austénite antérieure à la mi-épaisseur de la tôle d'acier résistante à l'abrasion est de

80 μm ou moins, la taille de grain d'austénite antérieure étant mesurée par : collecte d'un échantillon de mesure à partir de la partie centrale selon l'épaisseur de la tôle ayant une séparation centrale en tant qu'origine de craquelures à la découpe aux gaz, au niveau du centre de la tôle d'acier dans la direction de la largeur ; polissage miroir et attaque additionnelle de l'échantillon à l'acide picrique ; capture d'une image d'une plage de 10 mm × 10 mm en utilisant un microscope optique ; et analyse de l'image en utilisant un analyseur d'image pour calculer la taille de grain d'austénite antérieure, dans laquelle la taille de grain d'austénite antérieure est calculée comme étant un diamètre circulaire équivalent ;

dans laquelle la dureté à une profondeur de 1 mm à partir de la surface de la tôle d'acier résistante à l'abrasion est de 360 à 490 HBW 10/3000 en dureté Brinell, la dureté Brinell étant mesurée par : collecte d'une éprouvette pour la mesure à partir de la tôle d'acier de sorte que la position d'observation est une position en profondeur de 1 mm à partir de la surface de la tôle d'acier ; et, après polissage miroir de la surface de l'éprouvette, mesure de la dureté Brinell conformément à JIS Z 2243 (2008) avec une charge de 29 420 N (3 000 kgf) en utilisant des billes dures de tungstène de 10 mm de diamètre ; et

une concentration [Mn] de Mn en % en masse et une concentration [P] de P en % en masse dans une surface de séparation centrale suivant l'épaisseur de la tôle satisfont l'Expression (1) suivante :

$$0,04[Mn] + [P] < 0,55 \quad\quad ... \quad (1),$$

tel que mesuré par : production d'un échantillon de mesure par découpe d'une partie centrale de la tôle d'acier à la fois dans la direction transversale de la tôle et la direction de l'épaisseur de la tôle selon une forme parallélépipédique rectangulaire ayant une largeur de 500 mm dans la direction transversale de la tôle et une épaisseur de 3 mm dans la direction de l'épaisseur de la tôle ; découpe de l'acier découpé en 20 parties égales dans la direction transversale de la tôle, pour obtenir 20 échantillons de mesure ayant une largeur de 25 mm dans la direction transversale de la tôle ; polissage miroir de la surface, une largeur de 25 mm dans la direction transversale de la tôle × une épaisseur de 3 mm dans la direction de l'épaisseur de la tôle, de l'échantillon de mesure orthogonale à la direction de laminage ; et ensuite réalisation immédiate d'une analyse quantitative par un microanalyseur à sonde électronique (EPMA) avec la surface ayant fait l'objet d'un poli miroir en tant que plan de mesure, les conditions de la mesure EPMA étant comme suit : tension d'accélération : 20 kV ; courant d'irradiation : 0,5 μA ; temps cumulé : 0,15 s ; diamètre de faisceau : 15 μm ; et plage de mesure : hauteur 3 mm × largeur 25 mm x 20 échantillons ; dans laquelle la valeur maximale de (0,04[Mn] + [P]) mesurée est prise comme étant la valeur de (0,04[Mn] + [P]).

2. Tôle d'acier résistante à l'abrasion selon la revendication 1,
dans laquelle une réduction de surface dans un essai de traction après soumission à un traitement de fragilisation de revenu et à un traitement subséquent de fragilisation par l'hydrogène est de 10 % ou plus, dans laquelle la réduction de surface est mesurée par : chauffage de la tôle d'acier à 400 °C et ensuite refroidissement à l'air de la tôle d'acier, pour appliquer un traitement de fragilisation de revenu ; collecte d'une éprouvette de type barre ronde pour essai de traction JIS N° 14A, JIS Z 2241 (2014), ayant un diamètre de portion parallèle de 5 mm et une longueur de portion parallèle de 30 mm à partir de la partie centrale selon l'épaisseur de la tôle au niveau du centre selon la largeur de la tôle de sorte que la longueur de l'éprouvette est parallèle à la direction transversale de la tôle ; immersion de l'éprouvette de type barre ronde pour essai de traction dans une solution de thiocyanate d'ammonium à 10 % de 25 °C pendant 72 h, pour amener l'éprouvette pour essai de traction à absorber de l'hydrogène ; pour empêcher la diffusion de l'hydrogène à partir de l'éprouvette pour essai de traction, en galvanisant la surface de l'éprouvette pour essai de traction jusqu'à une épaisseur de 10 μm à 15 μm dans un bain galvanoplastique composé de ZnCl$_2$ et de NH$_4$Cl ; soumission de l'éprouvette résultante pour essai de traction à un essai de traction à une vitesse de déformation de 1,1 × 10$^{-5}$/s, et mesure de la réduction de surface après fracture conformément à JIS Z 2241 (2014) ; et réalisation de l'essai de traction cinq fois et utilisation de la valeur moyenne des réductions de surface en tant que réduction de surface.

3. Procédé de production de la tôle d'acier résistante à l'abrasion selon la revendication 1 ou la revendication 2, le procédé comprenant :

la soumission d'un acier en fusion à une coulée continue, pour former une brame ;
le chauffage de la brame à 1 000 °C à 1 300 °C ;
la soumission de la brame chauffée à un laminage à chaud dans lequel un laminage de réduction avec un facteur de forme de laminage de 0,7 ou plus et une réduction par laminage de 7 % ou plus à une température de partie centrale selon l'épaisseur de la tôle de 950 °C ou plus est effectué trois fois ou plus, pour obtenir une tôle d'acier laminée à chaud, dans lequel le facteur de forme de laminage ($ld/h_m$) est défini par l'expression :

$$ld/h_m = \{R(h_i-h_0)\}^{1/2}/\{(h_i + 2h_0)/3\},$$

où ld est la longueur projetée de l'arc de contact, $h_m$ est l'épaisseur moyenne de la tôle, R est le rayon de rouleau, $h_i$ est l'épaisseur de la tôle côté entrée, et ho est l'épaisseur de la tôle côté sortie, à chaque passage de rouleau ;
le réchauffage de la tôle d'acier laminée à chaud à une température de trempe de réchauffage ; et
la trempe de la tôle d'acier laminée à chaud réchauffée,
dans lequel la brame a la composition chimique selon la revendication 1,
dans la coulée continue, un léger laminage de réduction avec un gradient de réduction par laminage de 0,4 mm/m ou plus est effectué deux fois ou plus, en amont d'une position de solidification finale de la brame,
la température de trempe de réchauffage est de $Ac_3$ à 1 050 °C, dans lequel $Ac_3$ est calculée selon l'expression suivante :

$$Ac_3 \ (^{\circ}C) = 937 - 5722,765([C]/12,01 - [Ti]/47,87) + 56[Si] - 19,7[Mn] - 16,3[Cu] - 26,6[Ni] - 4,9[Cr] + 38,1[Mo] + 124,8[V] - 136,3[Ti] - 19[Nb] + 3315[B]$$

où [M] est la teneur en % en masse de l'élément M, et [M] = 0 dans le cas où l'élément M n'est pas ajouté, et une vitesse moyenne de refroidissement de 650 °C à 300 °C lors de la trempe est de 1 °C/s ou plus.

4. Procédé selon la revendication 3, comprenant en outre
le revenu de la tôle d'acier laminée à chaud trempée à une température de revenu de 100 °C à 300 °C.

5. Procédé de production de la tôle d'acier résistante à l'abrasion selon la revendication 1 ou la revendication 2, le procédé comprenant :

la soumission d'un acier en fusion à une coulée continue, pour former une brame ;
le chauffage de la brame à 1 000 °C à 1 300 °C ;
la soumission de la brame chauffée à un laminage à chaud dans lequel un laminage de réduction ayant un facteur de forme de laminage de 0,7 ou plus et une réduction par laminage de 7 % ou plus à une température de partie centrale selon l'épaisseur de la tôle de 950 °C ou plus est effectué trois fois ou plus, pour obtenir une tôle d'acier laminée à chaud, dans lequel le facteur de forme de laminage ($ld/h_m$) est défini par l'expression :

$$ld/h_m = \{R(h_i-h_0)\}^{1/2}/\{(h_i + 2h_0)/3\},$$

où ld est la longueur projetée de l'arc de contact, $h_m$ est l'épaisseur moyenne de la tôle, R est le rayon de rouleau, $h_i$ est l'épaisseur de la tôle côté entrée, et ho est l'épaisseur de la tôle côté sortie, à chaque passage de rouleau ; et
la trempe directe de la tôle d'acier laminée à chaud,
dans lequel la brame a la composition chimique selon la revendication 1,
dans la coulée continue, un léger laminage de réduction avec un gradient de réduction par laminage de 0,4 mm/m ou plus est effectué deux fois ou plus, en amont d'une position de solidification finale de la brame,
une température de trempe directe dans la trempe directe est $Ac_3$ ou plus, dans lequel $Ac_3$ est calculée selon l'expression suivante :

$$Ac_3 \ (^{\circ}C) = 937 - 5722,765([C]/12,01 - [Ti]/47,87) + 56[Si] - 19,7[Mn] - 16,3[Cu] - 26,6[Ni] - 4,9[Cr] + 38,1[Mo] + 124,8[V] - 136,3[Ti] - 19[Nb] + 3315[B]$$

où [M] est la teneur en % en masse de l'élément M, et [M] = 0 dans le cas où l'élément M n'est pas ajouté, et

une vitesse moyenne de refroidissement de 650 °C à 300 °C dans la trempe directe est de 1 °C/s ou plus.

6. Procédé selon la revendication 5, comprenant en outre
   le revenu de la tôle d'acier laminée à chaud trempée à une température de revenu de 100 °C à 300 °C.

FIG. 1

## FIG. 2

**EP 3 446 809 B1**

**REFERENCES CITED IN THE DESCRIPTION**

**Patent documents cited in the description**

- JP 4645306 B
- JP 4735191 B
- JP 5145804 B
- JP 5145805 B
- WO 2015115086 A1
- EP 2873747 A1